Europäisches Patentamt

European Patent Office

Office européen des brevets

(19)

(11) Publication number: **0 104 203**
**B1**

# EUROPEAN PATENT SPECIFICATION

(12)

(45) Date of publication of patent specification: **17.12.86**

(21) Application number: **83901041.0**

(22) Date of filing: **17.02.83**

(86) International application number:
**PCT/US83/00211**

(87) International publication number:
**WO 83/03148 15.09.83 Gazette 83/21**

(51) Int. Cl.⁴: **G 03 G 15/00,** G 03 G 15/01,
G 03 G 15/16

(54) IMAGE TRANSFER APPARATUS WITH SHEET HANDLING DEVICE FOR ELCTROGRAPHIC COPIER.

(30) Priority: **01.03.82 US 353778**
**01.03.82 US 353779**
**01.03.82 US 353780**

(43) Date of publication of application:
**04.04.84 Bulletin 84/14**

(45) Publication of the grant of the patent:
**17.12.86 Bulletin 86/51**

(84) Designated Contracting States:
**DE FR GB NL**

(56) References cited:
**CA-A- 950 933**
**GB-A-1 368 500**
**US-A-3 460 472**
**US-A-3 533 618**
**US-A-3 633 543**
**US-A-4 024 814**
**US-A-4 025 178**
**US-A-4 056 057**
**US-A-4 072 412**
**US-A-4 127 265**
**US-A-4 204 471**
**US-A-4 234 305**

**No relevant documents have been disclosed**

(73) Proprietor: **EASTMAN KODAK COMPANY**
**343 State Street**
**Rochester New York 14650 (US)**

(72) Inventor: **GUSTAFSON, Gary Boyd**
**5 Summerhaven Drive**
**Hilton, NY 14468 (US)**
Inventor: **FRITZ, Garold Frederic**
**638 Bending Bough Drive**
**Webster, NY 14580 (US)**
Inventor: **HOLZHAUSER, Ronald Charles**
**16790 Ridge Road**
**Holley, NY 14470 (US)**
Inventor: **McGLEN, James Allen**
**197 Eileen Drive**
**Rochester, NY 14620 (US)**

(74) Representative: **Blickle, K. Werner, Dipl.-Ing.**
**et al**
**KODAK AKTIENGESELLSCHAFT Postfach 369**
**D-7000 Stuttgart 60 (DE)**

Courier Press, Leamington Spa, England.

## Description

This invention relates to an image transfer apparatus for use in an electrographic copier for sequentially transferring related images from an image-recording member to a receiver sheet, such images being superimposed one on top of the other by means of a transfer charger to form a composite image on the receiver sheet, said apparatus comprising a movable sheet gripper which captures a moving receiver sheet and advances such sheet along an endless path to present, and re-present successive portions of the sheet to the image-recording member for image transfer.

In making multicolor reproductions with a plain paper electrophotographic copier, for example, a multicolored original document is illuminated to form color separation images. The color separation images expose a charged photoconductive image-receiving member at spaced locations along the member to form latent image charge patterns on the member corresponding to the color separation images. Exposure may take place sequentially by illuminating the document three times with white light and passing the light images respectively through primary color filters. Alternatively, the document may be illuminated once and the light image divided into color separation images, such as by light splitters to simultaneously expose the photoconductive member. The latent image charge patterns are developed with complementary colored marking particles (toner) to form transferable images. The transferable images are transferred from the photoconductive member to a receiver sheet in registered superimposed relation to form a multicolor reproduction.

In order to transfer the transferable images to the receiver sheet in superimposed register, the receiver sheet may be gripped and moved in a path to repeatedly bring the sheet into transfer relation with the photoconductive member at a transfer station. For example, in US—A—3,999,987 (issued December 28, 1976 in the name of Davis et al), the receiver sheet is gripped by a transfer roller and recirculated into engagement with the photoconductive member a number of times corresponding to the number of developed images. Transfer rollers, however, have a tendency to abrade the photoconductive member and must be continuously cleaned to prevent defects in the development of the latent image charge patterns. Further, the electrical potential of the transfer roller must be accurately adjusted to accomplish optimal transfer with different receiver materials, material thicknesses, or ambient conditions.

A transfer apparatus having a corona transfer charger overcomes the described disadvantages of transfer rollers. However, while a corona transfer charger provides a uniform transfer field, the mechanism for gripping the receiver sheet to repeatedly bring the sheet into transfer relation with the photoconductive member has been of complex construction; see, for example US—A—4,072,412. The complexity results, in part, from the apparent necessity of adequately supporting the receiver sheet without blocking the field of the charger relative to the sheet at the transfer location. Furthermore, the receiver sheet support confines the sheet such that the sheet does not have freedom to conform to the photoconductive member during transfer. This may induce positional misregistration between subsequent transferable images transferred to such sheet so that the images are not in accurate superimposed register.

The object of the invention is to provide apparatus for transferring images to a receiver sheet without supporting, confining or otherwise exerting forces on the receiver sheet at the point of transfer. The transfer apparatus of the invention is characterized in that said sheet gripper supports the receiver sheet by only its leading and trailing edges, and drive means are provided for advancing said gripper along said endless path.

The invention, its objects and advantages, will become more apparent from the ensuing detailed description of the preferred embodiment presented below.

In the detailed description of the preferred embodiments of the invention, reference is made to the accompanying drawings, in which:

Fig. 1 is a schematic illustration of an electrophotographic copier including a transfer apparatus according to this invention;

Fig. 1a is a view, in perspective, of a transfer apparatus according to this invention particularly, showing a movable sheet gripper mechanism and its drive, with portions being broken away or removed to facilitate viewing;

Fig. 2 is an end view, partially in cross-section, of the transfer apparatus of Fig. 1a;

Figs. 3a through 3f are schematic end views, similar to Fig. 2, of a transfer apparatus according to this invention at sequential stages of operation.

Fig. 4 is a cross-sectional view of a portion of an image-transfer apparatus structured in accordance with another preferred embodiment of the invention;

Fig. 5 is a bottom view, of the portion of the apparatus of Fig. 4, taken along lines 5—5 of Fig. 4;

Fig. 6 is an end view of a portion of the apparatus of Fig. 4, shown in a receiver sheet release position;

Fig. 7 is a view, in perspective, of another preferred embodiment of the invention with portions removed or broken away to facilitate viewing;

Fig. 8 is a side elevational view, on a slightly enlarged scale, of the apparatus of Fig. 7 with portions removed or broken away to facilitate viewing;

Fig. 9 is a cross-sectional end view of the improved receiver sheet transport, on an enlarged scale, taken along the lines 9—9 in Fig. 8, in position for receiving the lead edge of a receiver sheet;

Fig. 9a is an end view of the modified sheet-gripping mechanism, similar to Fig. 9, in an alternate position where the lead and trail edges of a receiver sheet are captured;

Fig. 10 is a cross-sectional end view of the mechanism of Fig. 7, on an enlarged scale, taken along the lines 10—10 in Fig. 8, in the same position as shown in Fig. 9;

Fig. 11 is an end view of a portion of the apparatus of Fig. 9a, on an enlarged scale; and

Fig. 12 is an end view of a portion of the apparatus of Fig. 10 on an enlarged scale, with such portion in position to effect the alternate position of the transport shown in Fig. 9a.

Referring now to the drawings, a transfer apparatus, according to this invention, is designated generally by the numeral 10. The transfer apparatus 10 of this invention is hereinafter illustratively described with relation to an electrophotographic copier for making color reproductions. Such reproductions are formed by accurate transfer of superimposed related transferable images corresponding to color separation images of input information from an image-carrying member to a receiver sheet. The accurate superimposed transfer of such related images, provided by the transfer apparatus 10, is important for forming a faithful color reproduction. Of course, this invention would also be useful for making monochrome reproductions formed by transfer of a plurality of related transferable images of a single color where accurate superimposed transfer is important.·

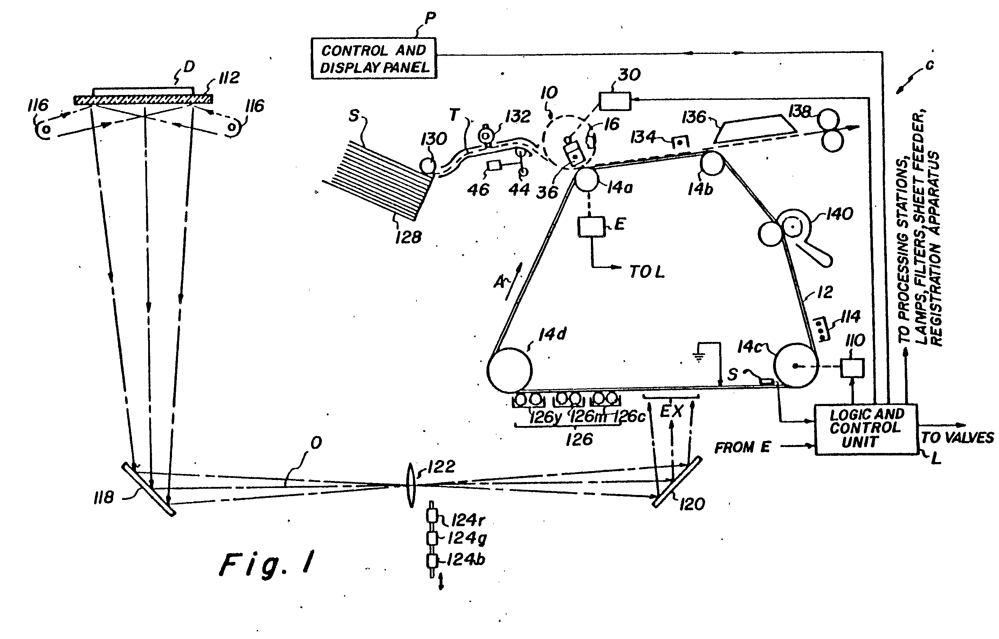

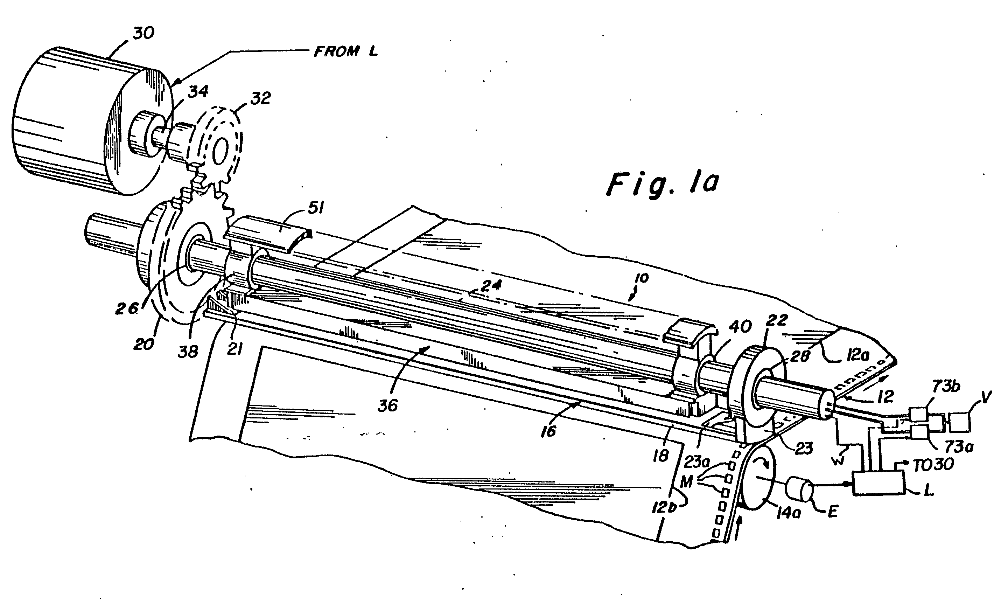

As shown in Fig. 1, the transfer apparatus 10 is located in juxtaposition with a grounded photoconductive member (web) 12 of an electrophotographic copier apparatus C. The web includes spaced image-receiving areas (e.g., areas 12a, 12b of Fig. 1a). Of course, the photoconductive member could take the form of a photoconductive drum or a plurality of discrete sheets of photoconductive material. Rollers 14a—14d support the web for travel about a closed loop path. A motor 110, controlled by a copier logic and control unit L, is operatively coupled to roller 14c to move the web 12 about its path in the direction of arrow A through various electrophotographic processing stations. The processing stations are also controlled by the unit L which includes, for example, an Intel 8080 microprocessor available from Intel Corporation of Sacramento, California. a series of marks or perforations M (see Fig. 1a) on the web associated with the image-receiving areas are detected by a sensor S which provides signals indicative of such detection. The sensor is operatively coupled to the unit L to enable the unit to monitor the location of image-receiving areas of the web as the web travels about its path. The unit L controls the timing of operation for the processing stations in response to the location of the image-receiving areas.

In a typical electrophotographic processing cycle, a document D is placed, information side down, on a transparent platen 112. The operator selects the desired number of copies and initiates the cycle by depressing appropriate buttons on the control and display panel P. Control signals produced in the panel P are sent to the logic and control unit L which, in turn, starts the motor 110 and effects operation of the processing stations. The photoconductive web 12 is moved under a primary charger 114 which places a uniform electrostatic charge on the web. As a charged image-receiving area of the web arrives at the exposure station EX, the unit L turns on flash lamps 116 to illuminate the document to generate a reflected light image of the document D. A reflected light image of the document is directed along optical path O to the exposure station EX by mirrors 118, 120 and lens 122, in register with the image-receiving area of the web to exposure such area. Exposure selectively reduces the charge on the photoconductive web 12 leaving an electrostatic latent image charge pattern in the image-receiving area corresponding to the reflected light image. The photoconductive web could be, of course, an insulating member having electrical charge induced electrostatic charge patterns or a ferromagnetic member having magnetically produced patterns.

After exposure the web 12 moves past development station 126. When multicolor reproductions are to be made by the copier C, the development station comprises three development mechanisms such as magnetic brush assemblies 126c, 126m, and 126y for example. With the subtractive color reproduction process, the magnetic brush assemblies respectively contain complementary primary color marking particles (cyan, magenta, and yellow). The particles exhibit a triboelectric charge opposite to the electrostatic charge on the photoconductive web 12 so that the particles are attracted to the web. With the use of three magnetic brush assemblies for development, the lamps 116 are flashed three times and the three reflected images are directed to the exposure station through primary color (red, green, and blue) filters 124r, 124g, 124b respectively inserted into the optical path O. The timing of the flashes and insertion of the filters are controlled by the logic and control unit L such that the images expose successive image-receiving areas of the web 12, arriving at the exposure station EX, to form spaced latent image charge patterns respectively corresponding to color separation images of the document D. The unit L then controls operation of the magnetic brush assemblies so that the latent image charge patterns are developed only with respective complementary colored marking particles to form transferable images. Of course, a fourth development station containing black marking particles may be provided for developing a latent image corresponding to a document having only black copy, or that portion of a multi-color document which is black, exposed through a neutral density filter for example.

The copier C has a sheet supply hopper 128 containing a stack S of receiver sheets, such as bond paper or transparency material. A sheet feed mechanism 130, such as an oscillating vacuum feeder, for example, is located in juxtaposition with the sheet stack to feed the topmost sheet into the transport path indicated by the broken line T. The mechanism 130 is operatively connected to the logic and control unit L so that such sheet is fed in timed relation to the travel of the first transferable image carried on the web 12. A registration apparatus 132 (such as that shown in US—A—4,019,732), located in the path T squares up the receiver sheet relative to the transfer apparatus 10. Additionally, sheet registration apparatus 132 is operatively associated with the logic and control unit L. The unit L controls operation of the apparatus 132 to provide any timing correction required to insure that the sheet reaches the apparatus in accurate relation to the first transferable image.

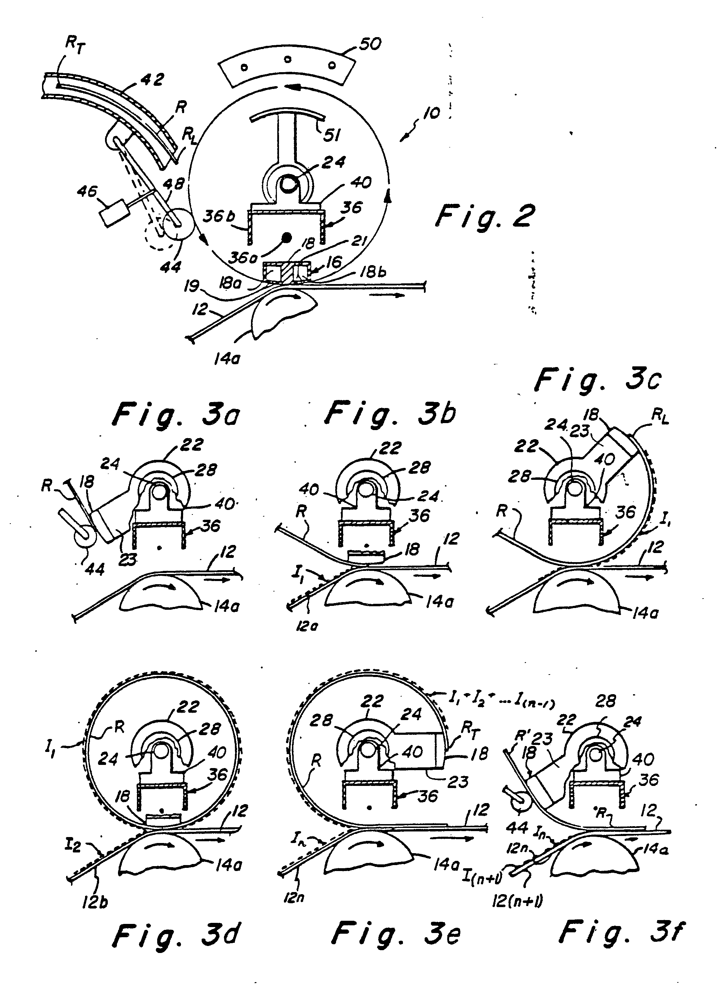

The transfer apparatus 10 of the invention includes a receiver sheet gripper mechanism 16 (see Fig. 1a and 2). The gripper 16 comprises a tow bar 18 which, as explained below, captures the lead edge of a receiver sheet as such sheet is advanced to the transfer apparatus by sheet feeding apparatus described later herein. The tow bar is mounted for movement along a closed loop path (in this case, circular) which, after the lead edge of a sheet is captured, causes the sheet to curl back on itself to form a self-supporting tube (or tubular section). After the receiving sheet is "tubularized", the trailing edge of the sheet is captured by the tow bar.

Tow bar 18 is supported on a stationary hollow shaft 24. The shaft 24 is located within the copier is spaced parallel relation to the plane of the photoconductive web 12 and perpendicular to the direction of travel of the web. A gear 20 and hub 22 are respectively journaled on the stationary hollow shaft 24 through bearings 26, 28. The tow bar is connected at one end to the gear 20 by bracket 21, and at the opposite end to the hub 22 by a radially extending arm 23 and bracket 23a. By this arrangement, the tow bar can be advanced along a circular path (as shown in Fig. 2) as gear 20 is rotatably driven by stepper motor 30 so as to be parallel to the longitudinal axis of the shaft 24. Stepper motor 30, supported within the copier, has a gear 32 fixed on the output shaft 34 of the motor in mating engagement with gear 20. When the stepper motor 30 is turned on by the logic and control unit L, it drives the tow bar 18, via gears 32 and 20, in stepped increments in a circular path about the longitudinal axis of shaft 24 (see Figs. 1a or 2). The tow bar is spaced from the shaft 24 such that a captured receiver sheet contacts the web 12 under a corona charger 36 as the tow bar is driven.

Conventional corona transfer charger 36 is mounted on the shaft 24 by brackets 38, 40 so that it is spaced from the photoconductive web 12 and within the closed loop path travelled by the tow bar. The length of the charger is selected to span the dimension of the image-receiving area perpendicular to the web travel path. Wires W, connected to a DC or biased AC electrical potential source (not shown) pass through the shaft 24 and hollow bracket 40 and are connected to a corona wire 36a (see Fig. 2) of the charger 36 to generate a transfer corona. A shield 36b directs the corona at the area of contact between the captured receiver sheet and web 12. The electrical potential source applies a potential to the corona wire 36a to charge the receiver sheet. The charge on the sheet is of the same polarity but substantially greater absolute value than the charge on the web attracting the marking particles to the web. Accordingly, the transfer corona is effective to overcome such attraction and transfer a transferable image line-by-line from the moving web to the moving receiver sheet during the time the sheet is in contact with the web.

The receiver sheet (e.g., sheet R of Fig. 2), transported along the path T, is directed toward the gripper 16 by a guide 42. The logic and control unit L for the copier actuates the stepper motor 30 such that at substantially the same time as the lead edge of the sheet intersects the path of the tow bar (rotated counterclockwise in Figs. 1, 2 and 3a—3f), the tow bar arrives at the point of intersection. Each of a plurality of rollers 44 (only one being shown) is supported by a pivot arm 48 adjacent to the transfer apparatus 10 across the path of travel of the receiver sheet. A solenoid 46, connected to the pivot arm 48, is actuated by the logic and control unit L to move the rollers to the solid line position of Fig. 2 or Fig. 3a for guiding the receiver sheet R into contact with the tow bar.

The tow bar 18 includes a vacuum plenum 18a (Fig. 2) connected to a vacuum source V by a conduit through a valve 73a (Fig. 1A). The plenum 18a has ports 19 through the wall contacted by the receiver sheet. The valve 73a is controlled by the logic and control unit L to apply vacuum to plenum 18a as the receiver sheet comes in contact with the plenum wall to effect capture of the lead edge of the sheet by vacuum tacking of the lead edge to the plenum wall. The application of vacuum is maintained as the tow bar rotates to keep the lead edge captured by the tow bar. Once the lead edge is captured, the logic and control unit L deactuates the solenoid 46 to return the rollers 44 to the broken line position of Fig. 2. After lead edge is captured, stepper motor 30 drives the tow bar to bring the lead edge of the sheet into engagement with the web 12 in timed relation to movement of the web. Thus, the lead edge of the sheet and the lead edge of the image-receiving area carrying a transferable image (e.g., area 12a carrying image $I_1$ of Fig. 3b) arrive under the transfer corona charger 36 at the same time. The width of the plenum 18a is relatively small so that its interference with the transfer operation is limited to margin areas of the receiver sheet; thus, no information is lost during transfer.

Continued rotation of the tow bar 18 about its path removes the lead edge of the receiver sheet from contact with the web. However, the normal beam strength of the receiver sheet and the electrostatic forces between the sheet and the grounded web cause following successive elements of the sheet to contact the web under the charger 36. The corona charge thus effectively acts on the sheet, which is substantially free to conform to the web, to efficiently transfer the transferable marking particle image $I_1$ to the sheet (see Fig. 3c). The tangential velocity of the tow bar 18 is controlled by the stepper motor 30 to substantially match the peripheral speed of the web 12. Therefore, there is no relative movement between the sheet and the transferable image so that smearing during transfer is prevented. Tha linear distance of travel for a captured receiver sheet is selected to exactly match the linear dimension of an image-receiving area on the web plus the interframe dimension (in direction of web travel). Accordingly, when the lead edge of the receiver sheet R is returned to engagement with the web, it is in register with the lead edge of the next image-receiving area on the web (e.g., area 12b carrying image $I_2$ of Fig. 3d). As the receiver sheet traverses its circular path under the influence of the tow bar 18, it passes an AC charger 50 (see Fig. 2) which provides a neutralizing charge to remove any charge on the sheet in order to facilitate subsequent transfers induced by the charger 36. An electrically grounded metal plate 51, supported by the upwardly extending arms of brackets 38 and 40, provides a reference potential during this charge neutralizing step.

A shaft encoder E is operatively associated with the web support roller 14a. The encoder produces signals indicative of the angular position of the roller due to movement of the web 12. Such signals are fed to the logic and control unit L where they are compared with image-receiving area location signals from the sensor S. Such comparison is used to determine whether a particular image-receiving area will reach the transfer station at the proper time relative to the arrival of the captured receiver sheet carried by the tow bar 18. If there is any positional deviation between the image-receiving area and the captured receiver sheet which would result in a non-registered transfer, the logic and control unit L adjusts the action of the stepper motor 30 during the passage of the interframe area beneath the charger 36 to eliminate such deviation. Such adjustment comprises adding or subtracting steps relative to a predetermined number of steps which are normally required for proper positioning of the receiver sheet relative to the image-receiving area. By such adjustment, relative movement between the receiver sheet and the web occurs at the interframe so that there is no image smearing as would occur if adjustment were made during transfer.

As the tow bar 18 returns the lead edge of the receiver sheet into engagement with the web, the trail edge of the sheet, in transfer relation with image $I_1$ in area 12a, is in juxtaposition with the lead edge and is contacted by the tow bar for capture (see Fig. 3d). Capturing of the trail edge is accomplished by vacuum tacking of the trail edge to a vacuum plenum 18b of the tow bar. The plenum 18b, which has ports 21 through the wall contacted by the receiver sheet, is connected through a conduit to the vacuum source V through valve 73b. The valve 73b is controlled by the logic and control unit L, in a manner similar to that described for valve 73a, to effect trail edge capture. The tow bar continues its rotation the number of times corresponding to the number of related transferable images remaining on web 12 for one complete reproduction of a particular document. With the lead and trail edges of the receiver sheet captured by the tow bar 18, the intermediate portion forms a self-supporting compliant loop. The beam strength of the sheet maintains the compliant loop so that successive elements of the sheet loop conformably contact the web under the transfer corona 36 during each of the subsequent transfers of transferable images through image $I_{(n-1)}$. During rotation, power is maintained to the corona charger 36 to effect transfer of the transferable images seriatim to the sheet.

As the transfer of the last image $I_n$ from area 12n is initiated (tow bar 18 in the same position as shown in Fig. 3d), the vacuum to plenum 18a is interrupted by unit L closing the valve 73a. The lead edge of the receiver sheet R is thus released and follows the path of the web 12 (see Fig. 3e) toward a downstream location. As is the case during the first image transfer, the normal beam strength of the receiver sheet and the electrostatic forces between the sheet and the grounded web cause following successive elements of the sheet to conform to the web at contact under the charger, with the sheet traveling at a peripheral speed equal to that of the web. Transfer of image $I_n$ is accordingly accomplished in accurate superimposed register. When the last transfer is completed to form a composite multicolor reproduction of the original multicolor document (tow bar 18 has returned to the position shown in Fig. 3d), the logic and control unit L closes the valve 73b so that the trail edge of the receiver sheet R is released. The sheet is thus free to be transported to the downstream location. At such location, the sheet is detacked from the web, such as by an AC detack charger 134 (see Fig. 1). The sheet is then transported by apparatus 136 to a fuser 138 for permanently fixing the superimposed transferred images to the sheet, such as by heat and pressure for example. Alternatively, the tow bar 18 could be used to effect detack by delaying respective release of the lead and trail edges of the receiver sheet for some angle of rotation downstream of the transfer corona 36, with the transport apparatus 136 adjacent to the tow bar. The receiver sheet may thus be positively detacked and transported away from the web at an angle relative thereto toward a fuser apparatus. Concurrently with receiver sheet detack, the web 12 continues to be moved along its travel path past a cleaning apparatus 140 where any residual marking particles are removed prior to recharging of the web for a subsequent processing cycle.

The subsequent processing cycles may be for making multiple reproductions of the document D, or for copying a different document placed on the platen 112. In either instance the copier C again functions in the above described manner. To fully utilize the production capabilities of the copier, the first image of the subsequent processing cycle may be exposed and developed in the image-receiving area immediately adjacent to the last image-receiving area of the previous copy cycle (e.g., image $I_{(n+1)}$ in area $12_{(n+1)}$, see Fig. 3f). The feed of a receiver sheet R' is initiated by the logic and control unit L so that the lead edge of the sheet is captured by the tow bar 18 adjacent to the trail edge of sheet R. Actuation of the solenoid 46 is timed by the unit L to position the rollers 44 to guide sheet R' into contact with the tow bar for lead edge capture. The timing of such actuation is selected so that the rollers do not contact the transferred images on sheet R thereby preventing possible smearing of such images. Thus the transfer operation may continue without the necessity of skipping any of the image-receiving areas of the web 12.

While the apparatus described above is capable of accurately transferring, in registry, images to a receiver sheet R, it is possible that the composite image will be skewed relative to the boundaries of the receiver sheet. For example, if the receiver sheet becomes skewed between the time it is squared up by apparatus 132 and reaches roller 44, the vacuum-operated tow bar will advance the sheet in a skewed condition (i.e. the axis of the sheet will be misaligned with the corresponding axis of the web). This problem is addressed by a modified sheet-gripping mechanism (described below) in which the lead edge of the receiver sheet is gripped mechanically after it is aligned with the lead edge of the image-receiving area of the web.

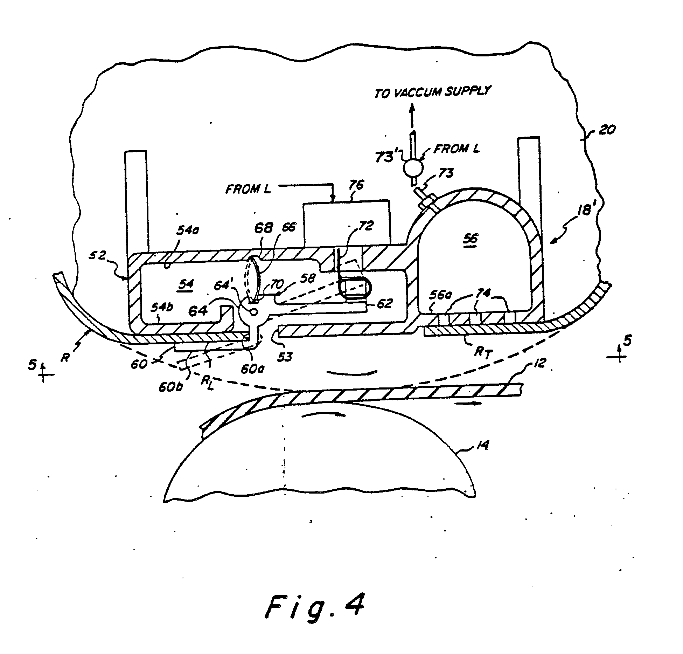

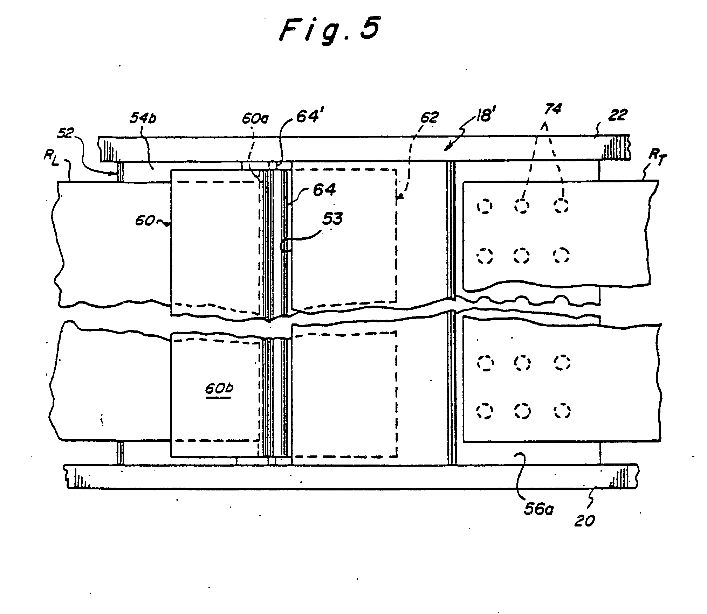

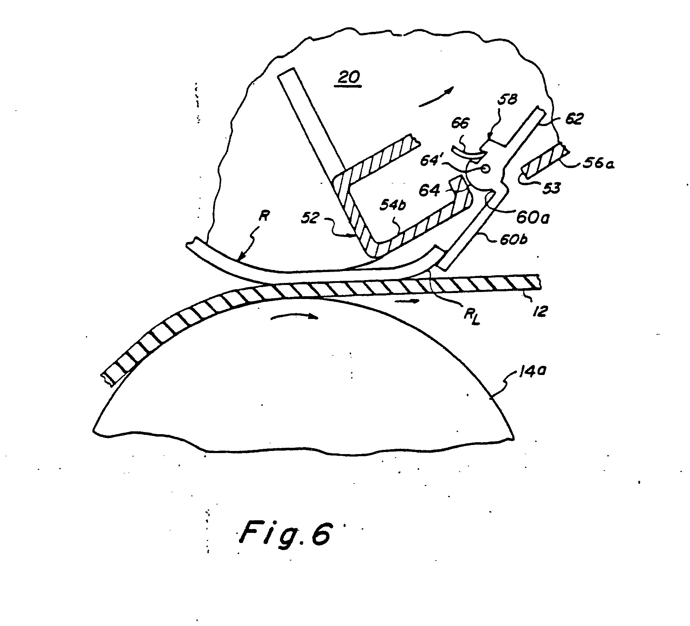

Referring now to Figs. 4 and 5, a modified tow bar 18' is shown to comprise a housing 52 which extends between the gear 20 and hub 22. The housing has first and second internal chambers 54, 56. A mechanically actuated receiver sheet-engaging clamp 58 has a hub 64 pivotally mounted on a pivot pin 64'. The pin 64' is supported by the housing 52 ad passes through the chamber 54. The clamp 58 is movable about the pin between a receiver sheet clamping position (solid line position of Fig. 4) and a release position (broken line position of Figs. 4 and 6). The clamp 58 includes a receiver sheet positioning member 60 and a release arm 62, both connected to the hub 64. The member 60 has a lead edge engaging portion 60a and an elongated portion 60b. The portion 60a extends radially outwardly from the hub 64 through an opening 53 in the wall 54b of the housing 52. Such portion is transverse to the direction of travel of the web 12 and parallel to a lead edge of an image-receiving area on the web in the web travel direction. The elongated portion 60b extends in a direction across the path of a receiver sheet and overlies a portion of the outer surface of the wall 54b. The release arm 62 is coupled by a retractable cable 72 to a solenoid 76 mounted on the housing 52. The solenoid 76 is operatively connected to the logic and control unit L to receive actuating signals from such unit. A snap action spring 66 is mounted at one end in a groove 68 in the upper wall 54a of the chamber 54, and at the other end in a groove 70 in the hub 64. When the clamp 58 is in its clamping position, the spring 66 is in its solid line position of Fig. 4 and maintains the clamp in such position, firmly clamping the receiver sheet between the portion 60b of the member 60 and the outer surface of the wall 54b; and conversely, when the clamp is in its release position, the spring is in its broken line position of Fig. 4 and maintains the clamp in such position freeing the receiver sheet from clamped engagement (see Fig. 6).

The second chamber 56 is connected to a vacuum source V by a conduit 73. The application of vacuum from the source V to the chamber 56 is controlled by a valve 73'. The valve 73' is operatively connected to the logic and control unit L to receive actuating signals from such unit. A wall 56a of the chamber 56 has a plurality of ports 74 extending therethrough. When vacuum is applied to the chamber 56, it is effective through the ports 74 to tack the trail edge of a receiver sheet to the outer surface of the wall 56a. The walls 56a and 54b lie substantially on a chord of the circular path described by rotation of the tow bar. The chord is selected such that the finger 60 lies in the segment area formed by the chord (see Fig. 4). Accordingly, when the tow bar is adjacent to the web 12, the finger 60 is spaced from the web so that the finger does not contact the web.

A receiver sheet (e.g. sheet R) is transported toward the gripper 16 through a guide 42 (see Fig. 2). The logic and control unit L actuates the stepper motor 30 to drive the tow bar 18 such that at substantially the same time as the lead edge $R_L$ of the receiver sheet intersects the path of the tow bar (rotated counterclockwise in Fig. 2), the tow bar arrives at the point of intersection. When the tow bar 18 arrives at the point of intersection with the receiver sheet, the clamp 58 is in its release position so as to readily accept the lead edge $R_L$ of such sheet. The speed at which the receiver sheet is transported through the guide 42 is greater than the tangential velocity of the tow bar 18. Therefore, the lead edge $R_L$ is forced into engagement with the portion 60a of the member 60, and the sheet positively registers itself against such portion. Since the portion 60a is parallel to the lead edge of an image-receiving area of the web 12, any skew which may have resulted during transport is removed.

Immediately prior to the tow bar 18' completing its first revolution about its circular path, the trail

edge $R_T$ of the receiver sheet is brought into contact with the web 12. Concurrently, tha lead edge of wall 56a of tow bar chamber 56 contacts the trail edge of the receiver sheet. At such time, the control unit L opens valve 73' enabling vacuum from the source V to be applied to the chamber 56. The vacuum is effective through ports 74 to capture the trail edge $R_T$ and tack such edge to the wall 56a. A particular advantage to using vacuum to capture the trail edge of the receiver sheet is that (within limits) variation in sheet size can be accommodated without losing control of the trail edge or requiring adjustment of the trail edge capture mechanism.

When the tow bar 18' returns the receiver sheet R into contact with the web W to initiate transfer of the last related transferable image, the lead edge $R_L$ of the receiver sheet is released (see Fig. 6). T effect such release, logic and control unit L actuates solenoid 76 to retract cable 72. The cable moves the clamp 58 to its release position, thus unclamping the receiver sheet from the surface 54b. The spring 66 snaps to its broken line position of Fig. 3 for holding the clamp in its release position, ready to receive another receiver sheet. Since the electrostatic forces effecting transfer tack the receiver sheet to the web 12, when the receiver sheet is released, the sheet separates from the tow bar 18' and follows the web toward a downstream location.

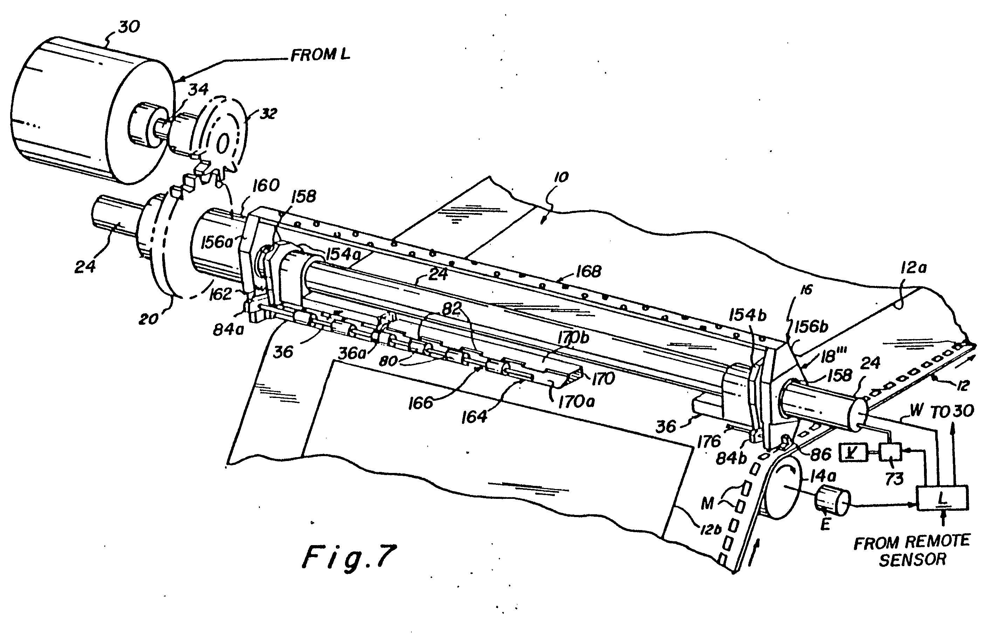

Another embodiment of the image transfer apparatus of the invention is disclosed in Figs. 7—12. This particular embodiment is considered particularly advantageous from the standpoint that its tow bar 18'' effects positive release of the receiver sheet, unlike the mechanisms heretofore described. As in the previously described embodiment such transfer apparatus includes a receiver sheet gripper 16 and a corona transfer charger 36. The gripper 16 comprises said tow bar 18'' which captures the lead and trail edges of a receiver sheet, leaving the portion of the sheet intermediate the captured edges self-supporting. The tow bar includes a first set of arms 154a, 154b and a second set of arms 156a, 156b. The sets of arms are respectively mounted on bearings 158 for rotation about the stationary hollow shaft 24. A hub 160, fixed to the arm 156a and rotatably mounted on the shaft 24, supports gear 20.

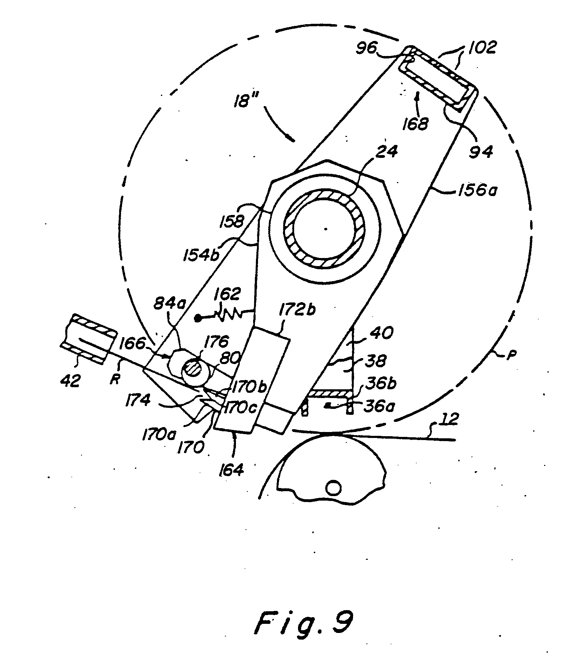

The stepper motor 30 is activated by the logic and control unit L to rotate the second set of arms 156a, 156b about the longitudinal axis of shaft 24. The two sets of arms are interconnected by spring 162 (one shown in Figs. 7, 9 and 9a) so that they are rotated substantially in unison when the gear 20 is driven by the stepper motor 30. The first set of arms 154a, 154b support mechanism 164 for guiding and aligning a receiver sheet lead edge; while the second set of arms 156a, 156b carry a mechanism 166 for mechanically clamping the lead edge to the mechanism 164, and a mechanism 168 for vacuum capturing the trail edge of such receiver sheet.

In operation, a receiver sheet (e.g., sheet R shown in Figs. 9 and 9a), is fed by a transport (not shown) toward the tow bar 18'' through a guide 42. The logic and control unit L actuates the stepper motor 30 to position the lead edge guiding and aligning mechanism 164 at the point of intersection of the sheet with the path P of the tow bar immediately prior to the time the lead edge of the sheet intersects such path. The mechanism 164 includes a guiding member 170. The member 170 is connected to and extends between plates 172a, 172b fixed on the outboard sides of arms 154a, 154b respectively. Opposed lower surface 170a and upper surface 170b of the member 170 converge along a line 170c to form a "V" shaped opening 174 for receiving the lead edge of a moving receiver sheet. Line 170c is perpendicular to the direction of travel of the web 12 and parallel to the lead edge of an image-receiving area on the web 12.

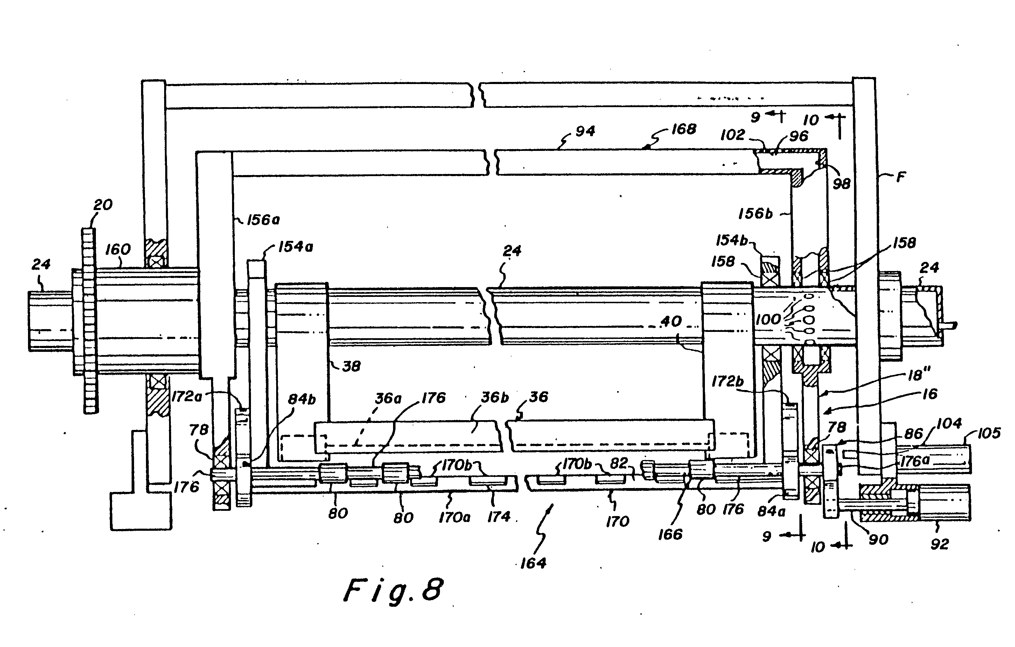

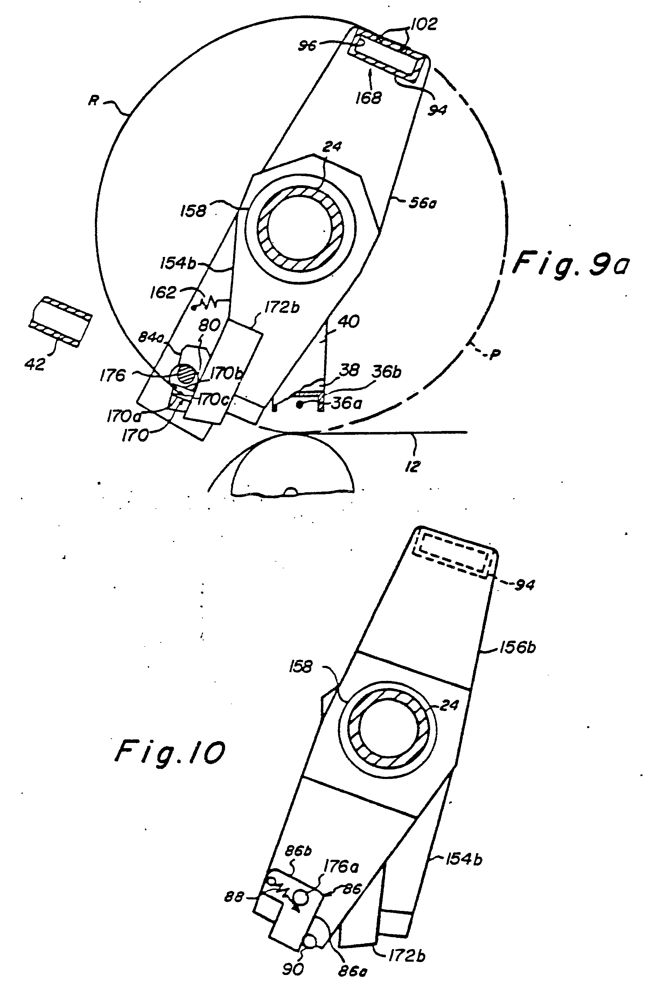

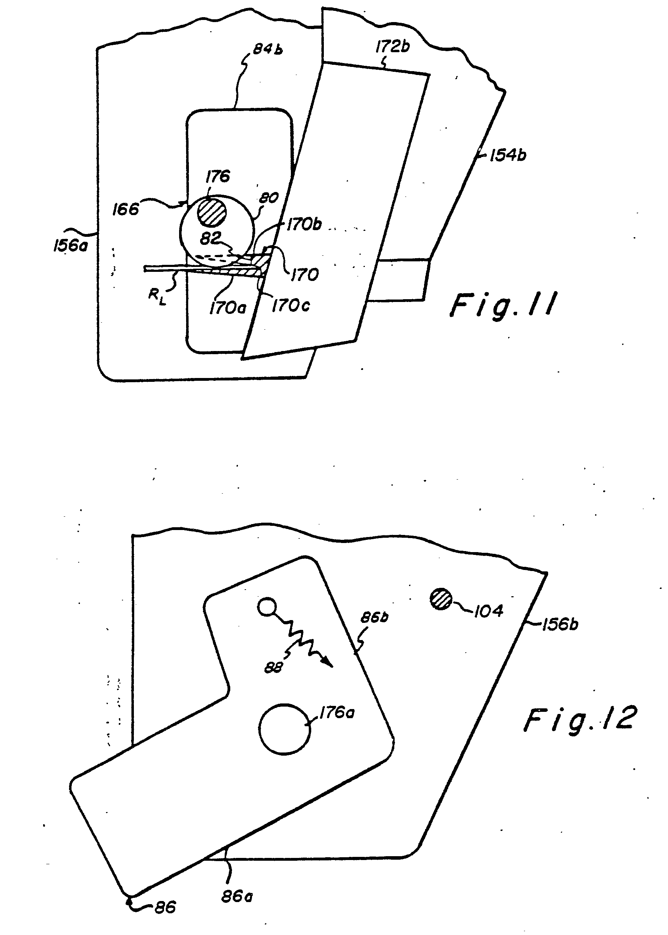

The clamping mechanism 166 includes a shaft 176 extending between the arms 156a, 156b, rotatably supported in bearings 78 carried by such arms. Pressing means in the form of a plurality of lobes 80 are eccentrically mounted on the shaft 176 for rotation with the shaft. The lobes 80 are longitudinally spaced along the shaft respectively opposite a plurality of spaced slots 82 formed in the upper surface 170b of the member 170 (see Figs. 7 and 8). Cams 84a, 84b are also mounted for rotation with the shaft 176, and are located in juxtaposition with plates 172a, 172b respectively. The plates 172a, 172b are urged into engagement with the cams by tension springs 162 connected between the sets of arms 154a, 154b and 156a, 156b respectively. An actuating lever 86, fixed on the end 176a of the shaft 176, is rotatable about the longitudinal axis of such shaft to the position shown in Fig. 10 or the position shown in Fig. 12. The lever 86 is maintained in each of these positions by an overcenter spring 88. The rotation of the lever 86 rotates the shaft 176, and thus the cams 84a, 84b to set the spacing between the sets of arms to one relative position shown in Fig. 9, or a different relative position shown in Fig. 9a.

The receiver sheet R is transported through the guide 42 toward the opening 174 of the member 170 with a linear velocity greater than the tangential velocity of such member. Accordingly, as the lead edge of such sheet is received in the opening 174, it is guided into positive engagement with the line 170c of intersection of the opposed surfaces 170a, 170b. Since such line is parallel to the lead edge of an image-receiving area, engagement of the receiver sheet lead edge and the line serves to remove any skew of the sheet relative to the tow bar 18'' and the web 12.

As the tow bar is driven from the position where a sheet is received, a pin 90 of a solenoid 92, supported in the frame F (see Fig. 8), is moved into the path of the lever 86 by actuation of the solenoid. The solenoid 92, operatively coupled to the logic and control unit L, is actuated by a signal from the unit L generated in response to movement of the tow bar from the sheet receiving position. The pin 90 is engaged by arm 86a of the lever 86 (see Fig. 10) as the tow bar rotates to rotate the lever to the position of Fig. 12. The lever 86 is then maintained in such position by the overcenter spring 88. Rotation of the lever 86 rotates the shaft 176 to locate the cams 84a, 84b to their position for setting the relative spacing of the sets of arms 154a, 154b and 156a, 156b as shown in Figs. 9a and 11. With such relative spacing, the lobes 80 extend through the slots 82 to press the receiver sheet against the lower surface 170a of the member 170. Therefore, as the tow bar 18″ continues to be driven about the path P, the member 170 tows the captured receiver sheet about such path.

The trail edge capturing mechanism 168 includes a cross-bar 94 interconnecting arms 156a, 156b. The cross-bar is radially spaced from the longitudinal axis of shaft 24 a distance substantially equal to the spacing of member 170 from the shaft, and is spaced from the shaft 176 a linear distance measured along the path P substantially equal to the dimension of a receiver sheet in the direction of sheet travel. The cross-bar 94 has an internal chamber 96 in flow communication with a passage 98 in the arm 156b (see Fig. 8). The passage 98 is, in turn, in flow communication with a vacuum source V (connected by a conduit to shaft 24) via ports 100 in the shaft 24. The application of vacuum from the source V to the chamber 96 is controlled by a valve 73 (see Fig. 7) operatively coupled to the logic and control unit L. The valve 73 is opened by a signal from the unit L generated in response to movement of the tow bar 18″ to a position where the cross-bar is adjacent to the trail edge of the receiver sheet as the trail edge passes under the charger 36. Vacuum applied to the chamber 96 is effective through a plurality of ports 102 in the cross-bar 94 to tack the trail edge of the receiver sheet to the cross-bar.

When the tow bar 18″ returns the receiver sheet R into contact with the web W to initiate transfer of the last related transferable image, the receiver sheet is released to follow the web toward a downstream location. Positive release is effected by moving a pin 104 of solenoid 105 (similar to solenoid 92), supported on the frame F, into the path of arm 86b of the lever 86 (see Fig. 12) by actuation of such solenoid. Solenoid 105, operatively coupled to the logic and control unit L, is actuated by a signal from the unit L in response to movement of the tow bar 18″ to the position where the receiver sheet contacts the web 12 for the last transfer, The pin 104 is engaged by the arm 86b during rotation of the tow bar to rotate the lever 86 to its position shown in Fig. 10. The overcenter spring 88 then maintains the lever in such position. Rotation of the lever 86 rotates the shaft 176 to locate the cams 84a, 84b to their position for setting the relative spacing of the sets of arms 154a, 154b and 156a, 156b as shown in Fig. 9. With such relative spacing, the lobes 80 are disengaged from the receiver sheet, and the cams move the arms 154a, 154b in an upstream direction to a remote location with respect to the lead edge $R_L$ of the receiver sheet. This effects positive release of the sheet from the member 170. The lead edge of the sheet is thus free to follow the web 12 toward the downstream location.

## Claims

1. Image transfer apparatus for use in an electrographic copier for sequentially transferring related images from an image-recording member to a receiver sheet, such images being superimposed one on top of the other by means of a transfer charger (36) to form a composite image on the receiver sheet, said apparatus comprising a movable sheet gripper (16) which captures a moving receiver sheet and advances such sheet along an endless path to present, and re-present successive portions of the sheet to the image-recording member for image transfer, characterized in that said sheet gripper supports the receiver sheet by only its leading and trailing edges ($R_L$, $R_T$), and drive means (20, 24, 30, 32) are provided for advancing said gripper along said endless path.

2. The apparatus as defined by claim 1 wherein said sheet gripper includes a tow bar (18, 18′, 18″) which engages only the leading and trailing edges of a sheet, said tow bar being mounted for movement along a circular path and comprising (a) first gripping means (18a, 58, 166) for capturing the leading edge of a receiver sheet presented thereto and for advancing said leading edge along said circular path, and (b) second gripping means (18b, 56, 168) for capturing said trailing edge when said leading edge has advanced a predetermined distance along said circular path.

3. The apparatus as defined by claim 2 wherein said first and second gripping means are connected to a vacuum source (V) to grip said leading and trailing edges by means of vacuum pressure.

4. The apparatus as defined by claim 2 wherein said first gripping means comprises a mechanical clamp (58, 166) and said second gripping means comprises a vacuum operated clamp (56, 168).

5. The apparatus as defined by claim 4 wherein said first gripping means comprises alignment means (60a, 170) for aligning said leading edge substantially perpendicular to said path prior to gripping said leading edge.

6. The apparatus as defined by claim 4 wherein said mechanical clamp (166) comprises means (104, 105, 86, 88, 176, 80) for effecting positive release of a receiver sheet from said clamp.

## Patentansprüche

1. Für die Verwendung in einem elektrographischen Kopiergerät geeignete Bildübertragungsvorrichtung, mit der miteinander in Beziehung stehende Bilder nacheinander von einem Bildaufzeichnungselement auf ein Bildempfangsblatt übertragen werden, wobei diese Bilder mittels

einer Übertragungseinheit (36) einander so überlagert werden, daß auf dem Empfangsblatt ein zusammengesetztes Bild entsteht, und wobei di Vorrichtung einen beweglichen Blattgreifer (16) aufweist, der jeweils an einem sich bewegenden Empfangsblatt angreift und dieses über eine Endlosbahn bewegt und dabei aufeinanderfolgende Bereiche des Blattes für die Bildübertragung immer wieder zu dem Bildaufzeichnungselement bringt, dadurch gekennzeichnet, daß der Blattgreifer das Empfangsblatt nur an seiner Vorder- und seiner Hinterkante (R$_L$, R$_T$) hält und daß Antriebsmittel (20, 24, 30, 32) vorgesehen sind, um den Greifer über die Endlosbahn zu bewegen.

2. Vorrichtung nach Anspruch 1, dadurch gekennzeichnet, daß der Blattgreifer eine Schleppstange (18, 18', 18'') aufweist, die jeweils nur an der Vorder- und Hinterkante eines Blatts angreift und so gelagert ist, daß sie sich über eine kreisförmige Bahn bewegt und die (a) erste Greifermittel (18a, 58, 166) aufweist, die die Vorderkante eines zum Bildaufzeichnungselement beförderten Empfangsblatts festhalten und diese Vorderkante über die kreisförmige Bahn bewegen sowie (b) zweite Greifermittel (18b, 56, 168), die die Hinterkante des Blattes festhalten, wenn sich die Vorderkante über eine vorbestimmte Länge der kreisförmigen Bahn bewegt hat.

3. Vorrichtung nach Anspruch 2, dadurch gekennzeichnet, daß die ersten und zweiten Greifermittel an eine Unterdruckquelle (V) angeschlossen sind und die Vorder- und die Hinterkante mittels Unterdruck festhalten.

4. Vorrichtung nach Anspruch 2, dadurch gekennzeichnet, daß die ersten Greifermittel ein mechanisches Halteelement (58, 166) und die zweiten Greifermittel ein durch Underdruck betätigtes Halteelement (56, 168) aufweisen.

5. Vorrichtung nach Anspruch 4, dadurch gekennzeichnet, daß die ersten Greifermittel Ausrichtmittel (60a, 170) umfassen, mit denen sich die Vorderkante, bevor sie festgehalten wird, im wesentlichen senkrecht zu der Bahn ausrichten läßt.

6. Vorrichtung nach Anspruch 4, dadurch gekennzeichnet, daß das mechanische Halteelement (166) Mittel (104, 105, 86, 88, 176, 80) aufweist, mit denen ein Empfangsblatt aus seiner zwangsläufigen Verbindung mit dem Greiferelement gelöst wird.

**Revendications**

1. Appareil de transfert d'image utilisable dans un copieur électrophotographique pour transférer séquentiellement des images mariées à partir d'un organe d'enregistrement d'image vers une feuille réceptrice, les images étant superposées les unes aux autres au moyen d'un dispositif à transfert de charges (36) de manière á former une image composite sur la feuille réceptrice, appareil comprenant un organe (16) de saisie de feuille susceptible d'agripper une feuille réceptrice en déplacement et d'avancer cette feuille sur une trajectoire sans fin de manière à présenter et à représenter des parties. successives de ladite feuille à l'organe d'enregistrement des images pour transférer les images, caractérisé en ce que ledit organe de saisie ne maintient la feuille que par ses extrémités aval et amont (R$_L$, R$_T$) et en ce qu'il comprend des moyens d'entraînement (20, 24, 30, 32) pour déplacer l'organe de saisie suivant ladite trajectoire sans fin.

2. Appareil conforme à la revendication 1, caractérisé en ce que l'organe de saisie comprend une barre d'entraînement (18, 18', 18'') qui ne vient au contact de la feuille que par les extrémités aval et amont de cette dernière ladite barre étant montée de manière à pouvoir se déplacer suivant une trajectoire circulaire et comprenant (a) un premier moyen de préhension (18a, 58, 166) pour agripper ladite extrémité aval d'une feuille réceptrice lorsqu'elle lui est présentée et pour avancer cette extrémité aval le long de ladite trajectoire circulaire, et (b) un second moyen de préhension (18b, 56, 168) pour agripper ladite extrémite amont lorsque ladite extrémité aval a été déplacée d'une distance déterminée le long de ladite trajéktoire circulaire.

3. Appareil conforme à la revendication 2, caractérisé en ce que le premier moyen de préhension et le second moyen de préhension sont reliés à une source de dépression (V) de manière à agripper ladite extrémité aval et ladite extrémité amont par effect de dépression.

4. Appareil conforme à la revendication 2, caractérisé en ce que le premier moyen de préhension comprend un dispositif mécanique de verrouillage (58, 166) et en ce que le second moyen de préhension comprend un dispositif de maintien à dépression (56, 168).

5. Appareil conforme à la revendication 4, caractérisé en ce que le premier moyen de préhension comprend un dispositif d'alignement (60a, 170) pour que ladite extrémité aval soit pratiquement perpendiculaire à ladite trajectoire circulaire avant la préhension de ladite extrémité aval.

6. Appareil conforme à la revendication 4, caractérisé en ce que le dispositif mécanique de verrouillage (166) comprend un agencement (104, 105, 86, 88, 176, 80) pour libérer de manière efficace une feuille réceptrice dudit dispositif mécanique de verrouillage.

Fig. 1

CONTROL AND DISPLAY PANEL

TO PROCESSING STATIONS, LAMPS, FILTERS, SHEET FEEDER, REGISTRATION APPARATUS

LOGIC AND CONTROL UNIT

TO VALVES

FROM E

0 104 203

Fig. la

Fig. 2

Fig. 3a

Fig. 3b

Fig. 3c

Fig. 3d

Fig. 3e

Fig. 3f

*Fig. 4*

# Fig. 5

Fig.6

Fig. 7

FROM L

FROM REMOTE
SENSOR

0 104 203

Fig.8

Fig. 9

Fig.9a

Fig.10

Fig.11

Fig.12